# EUROPEAN PATENT APPLICATION

(11) **EP 3 396 638 A1**
(43) Date of publication of application: **31.10.2018**
(21) Application number: 17167820.4
(22) Date of filing: 24.04.2017
(51) Int. Cl.: G07C 5/08, G05B 23/02

(54) **METHOD FOR STORING EVENTS**

(71) Applicant: KNORR-BREMSE Systeme für Schienenfahrzeuge GmbH, 80809 München (DE)
(72) Inventor: NAGY, Gabor, 80809 München (DE); CSUTORAS, Marton Ferenc, 80809 München (DE)
(74) Representative: Prüfer & Partner mbB Patentanwälte · Rechtsanwälte

(57) **Abstract**

A method for storing events in systems with reduced memory size is provided. The method includes the steps: storing a time of a state transition from an earlier state; monitoring following transitions of a state according to the earlier state for a predetermined range of time; and defining the state as an intermittent fault if a count of transitions of the state exceeds a predefined number within the predetermined range of time; and otherwise defining the state as a constant fault.

## Description

The invention relates to a method for storing events, in particular, to a method for storing events in systems with limited memory size.

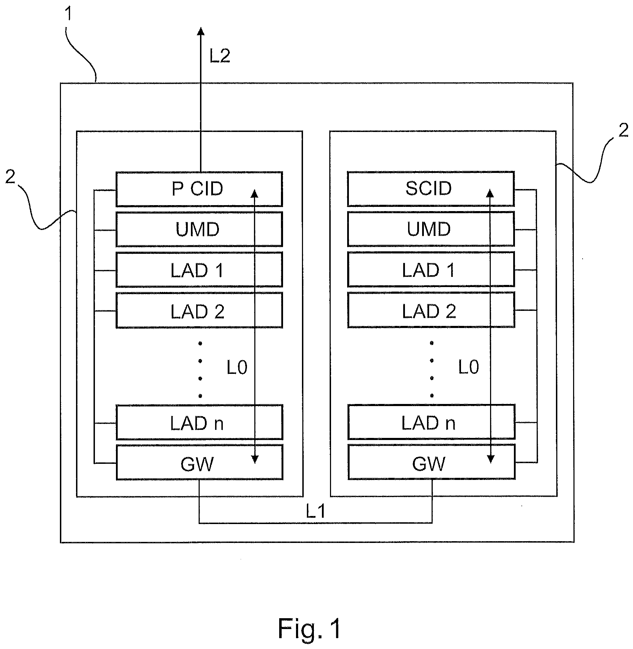

In railway applications, shared resource embedded systems are known. As shown in Fig. 1, a shared resource embedded system is e.g. composed by segments 1. Each segment 1 contains one or more units 2. In one segment 1 there is at least one central intelligence device (CID), which is called the primary CID (P CID). In the case of redundant configuration, there is an additional CID in the same segment. The additional CID is called the secondary CID (S CID). Central intelligence devices (CID) are e.g. responsible for brake force distribution, for the so called blending. In one unit, there can be one or more local application devices (LAD) as stand-alone devices which are responsible for lower level tasks like measuring environmental information such as axle load or valve pressure and to carry out wheel slide protection function. The minimal unit configuration contains at least one unit master device (UMD), one gateway (GW) and one CID and one or more LADs. The communication inside the unit is denominated LO (Level 0 communication), the communication between the units is denominated L1 (Level 1 communication), and the communication between the segments is denominated L2 (level 2 communication). The UMD is responsible to manage the device addressing inside the unit. The GW device is routing the messages between a LO bus and a L1 bus.

The LAD devices are lowest level devices of the system. Each LAD is supporting the logging of local events for diagnostic purpose but the LAD devices have only limited amount of resource of non-volatile memory, therefore, in the storing process of the events, the compression of the events should be realized.

One of the most common types of a fault in the railway industry is an intermittent fault which is a malfunction of a device that occurs at intervals, usually irregular. A cause of the fault can be the fact, that the boards are exposed to high level of mechanical vibration. The frequency of the intermittent fault can vary from a very low frequency (5 Hz) up to a high frequency (100 - 200 Hz).

In the shared resource embedded system both, the CID and the LAD, can generate diagnostics related events. These are stored in the non-volatile memory of this devices but the size of memory of these devices can be different. Usually, the size of the LAD's non-volatile memory is much less than that of the CID's memory.

In the case of the intermittent fault, every time there is a change between the correct and incorrect state of a component, namely a healthy to sick (or vice versa, sick to healthy) state transition, a state transition related event is generated. This event can be stored in the memory of the LAD device. An event can contain information relating to environmental information, a possible root cause, event time, diagnostic state, etc. Therefore, if there are rapid changes (e.g. 100 times in a second) between the two states, this would lead to a quick flood of the memory in the LAD.

The object underlying the invention is to remedy the above mentioned disadvantage and to provide a method for storing events which prevents flood of a memory.

The object is achieved by a method according to claim 1. Further developments of the intervention are subject-matter of the dependent claims.

According to an aspect of the invention, a method comprises the steps: storing a time of a state transition from an earlier state, monitoring following transitions of a state according to the earlier state for a predetermined range of time, and defining the state as an intermittent fault if a count of transitions of the state exceeds a predefined number within the predetermined range of time, and otherwise defining the state as a constant fault

By the monitoring of the state transitions within the predetermined range of time, an intermittent fault event can be detected if there are e.g. 5 transitions within 100 ms. Hence, it is possible not to generate and to store an event for every single transition and, therefore, the events to be stored are considerably reduced.

According to a first implementation of the method according to the aspect, the method further comprises the steps: generating a single intermittent fault event in case of the intermittent fault, and storing the single intermittent fault event.

In case that the intermittent fault is detected and the intermittent fault event is generated and stored, the intermittent fault can be logged without flooding the memory and evaluated for a countermeasure against the intermittent fault.

According to a second implementation of the method according to the aspect or to the first implementation, the method further comprises the steps: generating a respective one of the events according to the present state in case of the constant fault and storing the respective one of the events.

In case that no intermittent fault is detected, the event can be stored according to the present state, which, in turn, is merely one event to be stored.

According to a third implementation of the method according to the aspect or to anyone of the preceding implementations, the method comprises the step of starting a timer at every state transition.

By starting the timer at every state transition, a termination of the intermittent fault can be detected as soon as possible since the decision can be made directly after expiration of every range of time.

According to a fourth implementation of the method according to the aspect or to anyone of the preceding implementations, the state transition represents a transition which changes from a correct state to an incorrect state of a component and vice versa.

By the application of the basic method to the transition which changes from a correct state to an incorrect state of a component, it can be distinguished whether a cause of a failure is based on e.g. a high level of mechanical vibration or whether the failure is based on another cause.

According to a fifth implementation of the method according to the aspect or to anyone of the preceding implementations, the method further comprises the step of counting the state transitions during the duration of the intermittent fault and storing the count.

By counting the state transitions and storing during the duration of the intermittent fault, by knowing the duration of the range of time, a length of time of the intermittent fault and a frequency of the state transitions can be calculated so that the cause can be isolated by the frequency and the severity of the fault can be estimated from the frequency and/or from the length of time.

According to a sixth implementation of the method according to the aspect of anyone of the preceding implementations, the method is a method for storing events in systems with limited memory size for railway application.

In railway application, a specific task is to reduce memory capacities of individual devices due to cost reasons and functional requests. Therefore, the reduction of storing featureless events is necessary for preventing flooding the memory.

The invention is now elucidated referring to the attached drawings by means of an embodiment.

In particular:
- Fig. 1: shows a shared resource embedded system according to the state of the art;
- Fig. 2: shows a principle state of a behaviour representing an intermittent fault declared as an intermitting event; and
- Fig. 3: shows a more detailed state of a consequences of a behaviour having state transitions.

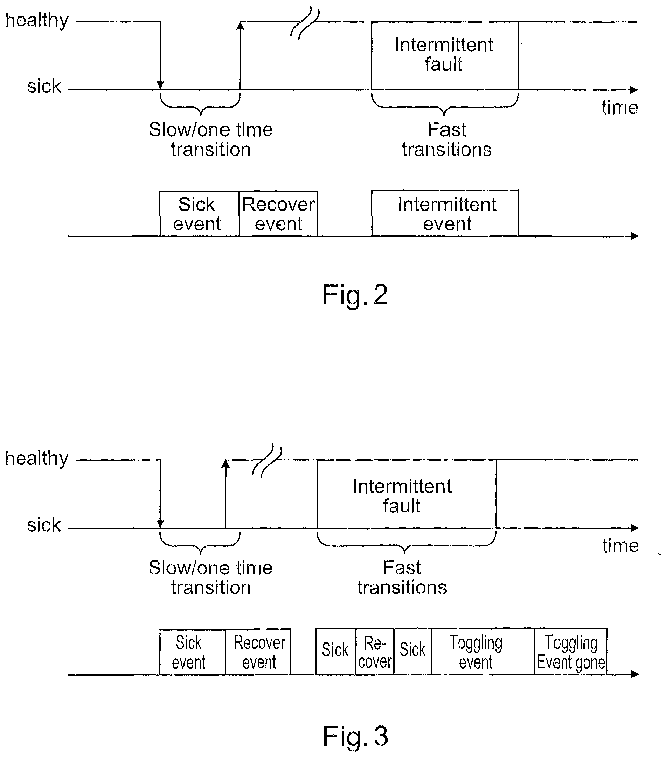

In Fig. 2, a principle state of a behaviour representing an intermittent fault declared as an intermittent event is shown. The behaviour represents a state of a component. If the state of the component becomes incorrect, the state transition is from healthy to sick, and if the state becomes correct, the state transition is from sick to healthy. Therefore, the behaviour is a behaviour of a fault, the behaviour changing from a health state to a sick state and vice versa. From this behaviour, a state transition related event which is stored in a memory of a LAD device (see Fig. 1) is generated. The event contains information relating to environmental information, a possible root cause, event time, and diagnostic state. In alternative embodiments, the behaviour can also be a behaviour representing another state transition of any component or system.

In the course of the behaviour shown in Fig. 2, a slow/one time transition from a healthy state to a sick state is shown and declared as a "sick event". Subsequently the transition from the sick state to the healthy state which is defined as a "recover event" is shown. Due to the respective "slow/one time transition", these transitions are interpreted as a non-intermittent fault of the component. Nevertheless, in the further course of the behaviour, an "intermittent fault" caused by "fast transitions" declared as an "intermittent event" is shown.

In use, a method for storing the events includes the steps: storing a time of a state transition from an earlier state, monitoring following transitions of a state according to the earlier state for a predetermined range of time, and defining the state as the intermittent fault if a count of transitions of the state exceeds a predefined number within the predetermined range of time. This can be seen in the case of the "intermittent fault", wherein the fast transitions persist for a certain time (e.g. 5 transitions in 100 ms). On the other hand, the state is defined as a constant fault as to be seen in the case of the "slow/one time transition".

In the case of the "intermittent fault", a single intermittent event is generated and stored in the memory of the assigned LAD device (see Fig. 1). In the case of the constant state after the latest transition, the event according to the present state is generated and stored in the memory of the assigned LAD device (see Fig. 1). Therefore, the events can be stored in systems with limited memory size for railway application. However, storing events in this way can also be performed in other systems with limited memory size.

Fig. 3 shows a more detailed state of consequences of a behaviour having state transitions. As in Fig. 2, the behaviour represents the state of the component. If the state becomes incorrect, the state transition is from healthy to sick, and if the state becomes correct, the state transition is from sick to healthy. In a course of the behaviour shown in Fig. 3, also, a slow/one time transition from a healthy state to a sick state is firstly shown. This transition is interpreted as a non-intermittent fault of the component and a "sick event" is declared and stored. Subsequently, a transition from the sick state to the healthy state is shown. This transition is also interpreted as a non-intermittent fault of the component and a "recover event" is declared and stored.

In the further course of the behaviour, an intermittent fault caused by fast state transitions is shown. The frequency of the state transitions can vary from a very low (5 Hz) up to high frequency (100-200 Hz). Therefore, as shown in Fig. 3, during an intermittent fault, at the beginning, the transition from the sick state to the recover state and again to the sick state are declared. Due to the persistence of the fast state transitions for a certain time, a state transition event is declared as to be a "toggling event". Therefore, the "toggling event" is generated and retained until the "intermittent fault" is gone. During the presence of the "toggling event", or during the duration of the intermittent fault, only the count of the state transitions is stored and no transition related event is generated or stored.

The timer is started at every state transition, therefore, it is possible to cyclically repeat the decision whether the "toggling event" still persists. When there is no more state transition for a certain time, which means that the intermittent fault is gone or the fault become permanent, the toggling event is declared gone. It is declared by generating and storing an event with "toggling event gone".

### REFERENCE SIGNS LIST

- 1: segment
- 2: unit

## Claims

1. Method for storing events, including the steps:
storing a time of a state transition from an earlier state;
monitoring following transitions of a state according to the earlier state for a predetermined range of time ; and
defining the state as an intermittent fault if a count of transitions of the state exceeds a predefined number within the predetermined range of time; and
otherwise defining the state as a constant fault.

2. Method according to claim 2, further comprising the steps:
generating a single intermittent fault event in case of the intermittent fault, and
storing the single intermittent fault event.

3. Method according to claim 1 or 2, further comprising the steps:
generating a respective one of the events according to the present state in case of the constant fault; and
storing the respective one of the events.

4. Method according to anyone of the preceding claims, further comprising the step:
starting a timer at every state transition.

5. Method according to anyone of the preceding claims, wherein the state transition represents a transition which changes from a correct state to an incorrect state of a component and vice versa.

6. Method according to anyone of the preceding claims, including the step:
counting the state transitions during the duration of the intermittent fault and storing the counts.

7. Method according to anyone of the preceding claims, wherein the method is a method for storing events in systems with limited memory size for railway application.
